# EUROPEAN PATENT APPLICATION

(11) **EP 4 618 504 A1**
(43) Date of publication of application: **17.09.2025**
(21) Application number: 25152828.7
(22) Date of filing: 20.01.2025
(51) Int. Cl.: H04L 47/20, H04L 41/16, H04L 47/2441, H04L 47/2483, H04L 47/32

(54) **NETWORK DEVICE WITH ARTIFICIAL INTELLIGENCE AIDED FLOW IDENTIFICATION AND/OR DROP-BASED QUEUE-LESS TRAFFIC CONTROL**

(30) Priority: 15.03.2024 US 202463565543 P; 03.01.2025 US 202519008654
(71) Applicant: Airoha Technology Corp., 300 Hsinchu City (TW)
(72) Inventor: LU, Kuo-Cheng, 300 Hsinchu City (TW)
(74) Representative: Hoefer & Partner Patentanwälte mbB

(57) **Abstract**

A network device (100) includes AI aided flow identification circuit (104) and flow classification circuit (106). The AI aided flow identification circuit (104) identifies specific flows of only a portion of pre-defined flow types through machine learning, and generates a flow-type override indication for each of the specific flows. The flow classification circuit (106) classifies each flow into one pre-defined flow type. The AI aided flow identification circuit (104) generates a flow-type override indication for a first flow. In response to the flow-type override indication for the first flow, the flow classification circuit (106) classifies the first flow into a first flow type regardless of a flow rate of the first flow. The AI aided flow identification circuit (104) does not generate a flow-type override indication for a second flow, and the flow classification circuit (106) classifies the second flow into the first flow type or a second flow type according to a flow rate of the second flow.

## Description

### CROSS REFERENCE TO RELATED APPLICATIONS

This application claims the benefit of U.S. Provisional Application No. 63/565,543, filed on March 15th, 2024. The content of the application is incorporated herein by reference.

### BACKGROUND OF THE INVENTION

### 1. FIELD OF THE INVENTION

The present invention relates to forwarding network packets from one network to another network, and more particularly, to a network device with artificial intelligence (AI) aided flow identification and/or drop-based queue-less traffic control.

### 2. DESCRIPTION OF THE PRIOR ART

The so-called quality of service (QoS) is for different needs of various network applications. In general, a network device (e.g., gateway or switch) classifies the upstream flows in the ingress phase, and then maps different flow types to different priority queues in the egress phase. Finally, the queue scheduling determines the manner in which packets of different priority queues are forwarded, thereby implementing the QoS features. Specifically, when the network is congested, the queue scheduling is usually used to solve the problem that multiple flows compete for limited resources at the same time. However, regarding a downstream application, there are no priority queues due to the fact that bandwidth of a local area network (LAN) is much larger than that of a wide area network (WAN). Thus, there is a need for an innovative queue-less traffic control scheme that can achieve traffic control (i.e., rate control) of different types of flows in the absence of priority queues. In addition, the performance of the traffic control phase highly depends on the preceding flow classification phase. Thus, there is also a need for an innovative flow classification scheme that can accurately distinguish between lower-priority flows (e.g., file transfer flows) and higher-priority flows (e.g., low latency flows and video streaming flows) without a significant increase in the implementation cost.

### SUMMARY OF THE INVENTION

One of the objectives of the claimed invention is to provide a network device with AI-aided flow identification and/or drop-based queue-less traffic control. Network devices according to the invention are defined in the independent claims. The dependent claims define preferred embodiments thereof.

According to a first aspect of the present invention, an exemplary network device is disclosed. The exemplary network device includes an AI-aided flow identification circuit and a flow classification circuit. The AI-aided flow identification circuit is arranged to identify specific flows of only a portion of a plurality of pre-defined flow types through machine learning (ML), and generate a flow-type override indication for each of the specific flows included in a plurality of flows received by the network device. The flow classification circuit is arranged to classify each of the plurality of flows into one of the plurality of pre-defined flow types. The AI-aided flow identification circuit generates a flow-type override indication for a first flow of the plurality of flows. In response to the flow-type override indication for the first flow, the flow classification circuit classifies the first flow into a first flow type of the plurality of pre-defined flow types regardless of a flow rate of the first flow. The AI-aided flow identification circuit does not generate a flow-type override indication for a second flow of the plurality of flows, and the flow classification circuit classifies the second flow into the first flow type or a second flow type of the plurality of pre-defined flow types according to a flow rate of the second flow.

According to a second aspect of the present invention, an exemplary network device is disclosed. The exemplary network device includes a flow classification circuit and a traffic control circuit. The flow classification circuit is arranged to classify each of a plurality of flows received by the network device into one of a plurality of pre-defined flow types. The traffic control circuit is arranged to apply drop-based queue-less traffic control to at least one of the plurality of flows after the at least one of the plurality of flows is classified into at least one of the plurality of pre-defined flow types.

These and other objectives of the present invention will no doubt become obvious to those of ordinary skill in the art after reading the following detailed description of the preferred embodiment that is illustrated in the various figures and drawings.

### BRIEF DESCRIPTION OF THE DRAWINGS

FIG. 1 is a diagram illustrating a network device according to an embodiment of the present invention.
FIG. 2 is a diagram illustrating a drop-based rate control scheme supported by the traffic control circuit that operates in the absence of QoS priority queues according to an embodiment of the present invention.
FIG. 3 is a diagram illustrating a meter-based rate control scheme supported by the traffic control circuit that operates in the absence of QoS priority queues according to an embodiment of the present invention.
FIG. 4 is a diagram illustrating a modified deficit round robin (DRR) rate control scheme supported by the traffic control circuit that operates in the absence of QoS priority queues according to an embodiment of the present invention.
FIG. 5 is a diagram illustrating operations of the modified DRR rate control scheme according to an embodiment of the present invention.
FIG. 6 is a diagram illustrating the relationship between difference values, refill counts, and average refill count according to an embodiment of the present invention.
FIG. 7 is a diagram illustrating a first co-working design according to an embodiment of the present invention.
FIG. 8 is a diagram illustrating a second co-working design according to an embodiment of the present invention.

### DETAILED DESCRIPTION

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ... ". Also, the term "couple" is intended to mean either an indirect or direct electrical connection. Accordingly, if one device is coupled to another device, that connection may be through a direct electrical connection, or through an indirect electrical connection via other devices and connections.

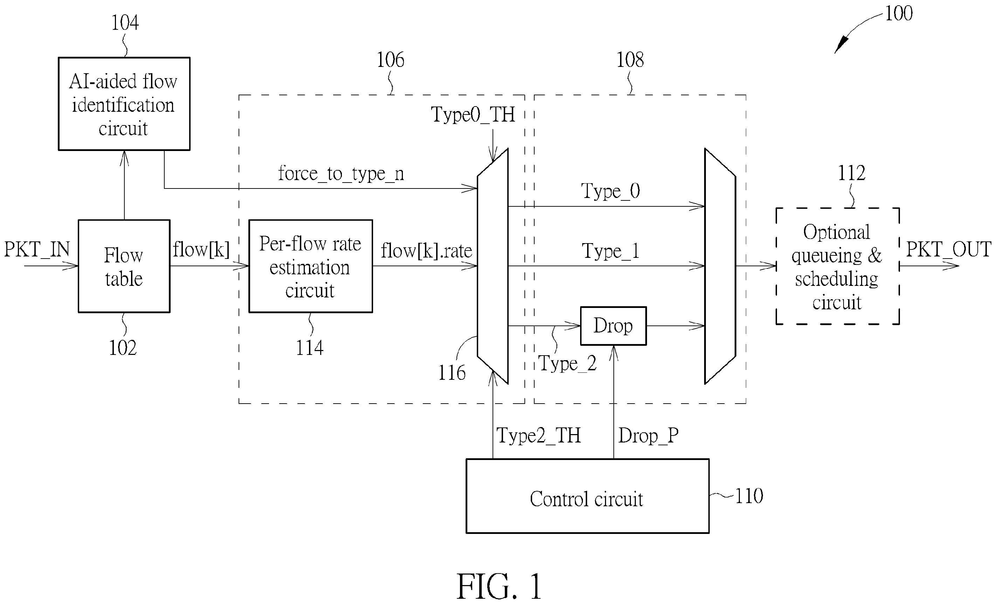

FIG. 1 is a diagram illustrating a network device according to an embodiment of the present invention. By way of example, but not limitation, the network device 100 may be a home gateway for forwarding packets from a first network to a second network, where one of the first network and the second network may be a WAN, and the other of the first network and the second network may be a LAN. For example, regarding a downstream application, the network device 100 may receive ingress packets from a WAN, and may send egress packets to a LAN. For another example, regarding an upstream application, the network device 100 may receive ingress packets from a LAN, and may send egress packets to a WAN. However, these are for illustrative purposes only, and are not meant to be limitations of the present invention. In practice, any network device using the proposed AI-aided flow identification scheme and/or the proposed drop-based queue-less traffic control scheme falls within the scope of the present invention.

In this embodiment, the network device 100 may include a flow table 102, an AI-aided flow identification circuit 104, a flow classification circuit 106, a traffic control circuit 108, a control circuit 110, and an optional queueing & scheduling circuit 112. The flow classification circuit 106 may include a per-flow rate estimation circuit 114 and a flow dispatcher circuit 116. The network device 100 is arranged to receive ingress packets PKT_IN from a first network, and send egress packets PKT_OUT to a second network. For example, the ingress packets PKT_IN may be generated from an upstream application, the first network may be a LAN, and the second network may be a WAN. For another example, the ingress packets PKT_IN may be generated from a downstream application, the first network may be a WAN, and the second network may be a LAN. The queueing & scheduling circuit 112 may include a plurality of priority queues, and may support typical QoS queue scheduling algorithms, including strict priority (SP), weighted round-robin (WRR), etc. In a case where the ingress packets PKT_IN are generated from an upstream application, the queueing & scheduling circuit 112 may be enabled or disabled (or bypassed), depending upon actual design considerations. In another case where the ingress packets PKT_IN are generated from a downstream application, the queueing & scheduling circuit 112 may be disabled (or bypassed). Since the present invention is focused on the proposed AI-aided flow identification scheme and the proposed drop-based queue-less traffic control scheme, further description of the optional queueing & scheduling circuit 112 is omitted here for brevity. It should be noted that only the components pertinent to the present invention are illustrated in FIG. 1. In practice, the network device 100 may include additional components to achieve other designated functions.

The flow table 102 may include a plurality of flow entries, each recording identification information of a particular flow. For example, the identification information may include a port number, a source address, a destination address, etc. Hence, an ingress packet PKT_IN that matches identification information recorded in a flow entry is regarded as a packet belonging to a flow associated with the matched flow entry. The flow table 102 can be used to distinguish between different flows received by the network device 100.

The AI-aided flow identification circuit 104 is arranged to identify specific flows of only a portion (e.g., Type_2) of a plurality of pre-defined flow types (e.g., Type_0, Type_1, and Type_2) through machine learning (ML), and generate a flow-type override indication force_to_type_n for each of the specific flows (e.g., Type_2 flows) included in a plurality of flows received by the network device 100. For example, the pre-defined flow type Type_0 may be a low latency flow type (i.e., Type_0=LL) with the highest priority, the pre-defined flow type Type_1 may be a video streaming flow type (i.e., Type_1=BW) with the second highest priority, and the pre-defined flow type Type_2 may be a file transfer flow type (i.e., Type_2=BK) with the lowest priority. Hence, flows classified into the pre-defined flow type Type_0 may be generated from latency-sensitive applications, flows classified into the pre-defined flow type Type_1 may be generated from bandwidth-sensitive applications, and flows classified into the pre-defined flow type Type_2 may be background traffic. However, these are for illustrative purposes only, and are not meant to be limitations of the present invention. In practice, settings of the pre-defined flow types may be adjusted, depending upon actual design considerations. For example, the pre-defined flow types may include sub-types of the LL flow type, sub-types of the BW flow type, and/or sub-types of the BK flow type. For better comprehension of technical features of the present invention, the following assumes that the pre-defined flow types include Type_0=LL, Type_1=BW, and Type_2=BK.

The first N packets of each flow may be copied and provided to the AI-aided flow identification circuit 104 for Type_2 flow identification. Preferably, according to the present invention, the AI-aided flow identification circuit 104 may be implemented by a central processing unit (CPU) that acts as a reinforcement learning (RL) agent for Type_2 flow identification. However, these are for illustrative purposes only, and are not meant to be limitations of the present invention. In practice, the present invention has no limitations on the number of pre-defined flow types supported by the flow classification circuit 106 and the number of specific flow types to be identified using the AI-aided flow identification circuit 104, and also has no limitations on the type of machine learning employed by the AI-aided flow identification circuit 104.

It should be noted that the AI-aided flow identification circuit 104 is not required to identify flows of the pre-defined flow types Type_0 and Type_1. In this way, using the AI-aided flow identification circuit 104 to identify flows of the pre-defined flow type Type_2 can be achieved without using a complex ML model, which can provide accurate Type_2 flow identification without introducing a significant increase in the implementation cost.

The flow classification circuit 106 is arranged to classify each of the flows received by the network device 100 into one of the pre-defined flow types (e.g., Type_0, Type_1, and Type_2) . Regarding each flow (labeled by flow[k]), the per-flow rate estimation circuit 114 of the flow classification circuit 106 is arranged to estimate a flow rate (labeled by flow[k].rate), and the flow dispatcher circuit 116 of the flow classification circuit 106 is arranged to classify the flow (labeled by flow[k]) into one of the pre-defined flow types (e.g., Type_0, Type_1, and Type_2) . For example, when the AI-aided flow identification circuit 104 generates a flow-type override indication force_to_type_n for a first flow received by the network device 100, the flow classification circuit 106 (particularly, flow dispatcher circuit 116 of flow classification circuit 106) classifies the first flow into a pre-defined flow type Type_n (e.g., Type_n=Type_2=BK) regardless of a flow rate of the first flow. Specifically, in response to the flow-type override indication force_to_type_n, the flow classification circuit 106 (particularly, flow dispatcher circuit 116 of flow classification circuit 106) classifies the first flow into the pre-defined flow type Type_n (e.g., Type_n=Type_2=BK) regardless of the flow rate of the first flow. For another example, when the AI-aided flow identification circuit 104 does not generate a flow-type override indication force_to_type_n for a second flow received by the network device 100, the flow classification circuit 106 (particularly, flow dispatcher circuit 116 of flow classification circuit 106) classifies the second flow into one of the pre-defined flow types Type_0 (e.g., Type_0=LL), Type_1 (e.g., Type_1=BW), and Type_2 (e.g., Type_2=BK) according to a flow rate of the second flow.

The dispatching logic of the flow dispatcher circuit 116 may be expressed using the following pseudo code.

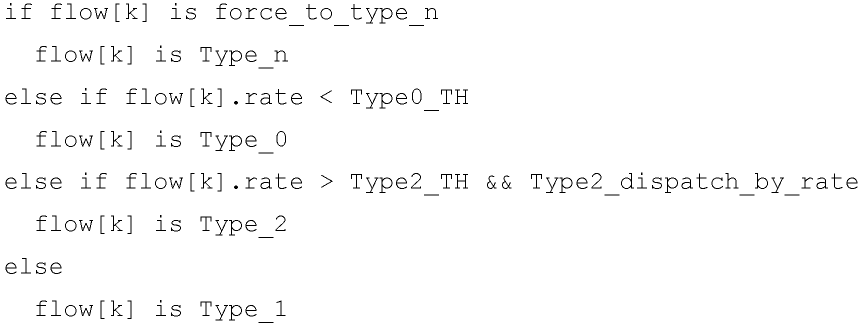

If the AI-aided flow identification circuit 104 generates a flow-type override indication force_to_type_n for an input flow flow[k], the flow dispatcher circuit 116 classifies the input flow flow[k] into the flow type Type_n (e.g., Type_n=Type_2) directly. If the AI-aided flow identification circuit 104 does not generate a flow-type override indication force_to_type_n for the input flow flow[k], the flow dispatcher circuit 116 compares the flow rate flow[k].rate of the input flow flow[k] with a threshold value Type0_TH, and classifies the input flow flow[k] into the pre-defined flow type Type_0 when the flow rate flow[k].rate of the input flow flow[k] is lower than the threshold value Type0_TH.

If the flow rate flow[k] .rate of the input flow flow[k] is not lower than the threshold value Type0_TH, the flow dispatcher circuit 116 compares the flow rate flow[k].rate of the input flow flow[k] with another threshold value Type2_TH (Type2_TH > Type0_TH), and classifies the flow flow[k] into the pre-defined flow type Type_2 when the flow rate flow[k] .rate of the input flow flow[k] is higher than the threshold value Type2_TH.

Preferably, according to the present invention, the flow dispatcher circuit 116 may consider additional information when making a flow classification decision. For example, the flow dispatcher circuit 116 further checks a user-defined setting Type2_dispatch_by_rate which is manually set to indicate whether dispatching a flow of the flow type Type_2 by its flow rate is enabled. Hence, the flow dispatcher circuit 116 classifies the flow flow[k] into the pre-defined flow type Type_2 when the flow rate flow[k] .rate of the input flow flow[k] is higher than the threshold value Type2_TH and the user-defined setting Type2_dispatch_by_rate indicates dispatching a flow of the flow type Type_2 by its flow rate is enabled (e.g., Type2_dispatch_by_rate==1).

If the flow rate flow[k] .rate of the input flow flow[k] is not higher than the threshold value Type2_TH under a condition that the user-defined setting Type2_dispatch_by_rate indicates dispatching a flow of the flow type Type_2 by its flow rate is enabled (e.g., Type2_dispatch_by_rate==1), the flow dispatcher circuit 116 classifies the flow flow[k] into the pre-defined flow type Type_1. Specifically, since the user-defined setting Type2_dispatch_by_rate indicates dispatching a flow of the flow type Type_2 by its flow rate is enabled (e.g., Type2_dispatch_by_rate==1), the flow dispatcher circuit 116 compares the flow rate flow[k].rate of the input flow flow[k] with threshold values Type0_TH and Type2_TH (Type0_TH < Type2_TH), and classifies the input flow flow[k] into the pre-defined flow type Type_1 when the flow rate flow[k].rate of the input flow flow[k] is neither lower than the threshold value Type0_TH nor higher than the threshold value Type2_TH.

If the flow rate flow[k] .rate of the input flow flow[k] is not lower than the threshold value Type0_TH under a condition that the user-defined setting Type2_dispatch_by_rate indicates dispatching a flow of the flow type Type_2 by its flow rate is disabled (e.g., Type2_dispatch_by_rate==0), the flow dispatcher circuit 116 classifies the flow flow[k] into the pre-defined flow type Type_1.

Preferably, according to the present invention, the threshold value Type0_TH may be a user-defined value and is fixed during the flow classification process, and the threshold value Type2_TH may be dynamically adjusted during the flow classification process. In this embodiment, the control circuit 110 is responsible for dynamically adjusting the threshold value Type2_TH. In one exemplary design, the threshold value Type2_TH may be set by an adaptive algorithm. In another exemplary design, the threshold value Type2_TH may be inferenced by ML. For example, the control circuit 110 may be implemented by the CPU that acts as an RL agent for setting the threshold value Type2_TH, where a current value of R01 (i.e., sum of flow rates of Type_0 and Type_1), a previous value of R01, a current value of R (i.e., sum of flow rates of Type_0, Type_1, and Type_2), and a previous value of R may act as the state of the RL agent, and adjusting the threshold value Type2_TH may be the action of the RL agent.

As mentioned above, the flow classification circuit 106 classifies each of the flows received by the network device 100 into one of the pre-defined flow types (e.g., Type_0, Type_1, and Type_2) . After at least one flow (e.g., Type_2 flow) is classified into at least one pre-defined flow type (e.g., Type_2), the traffic control circuit 108 applies drop-based queue-less traffic control to the at least one flow. For example, the pre-defined flow type Type_0 may be a low latency flow type (i.e., Type_0=LL) with the highest priority, the pre-defined flow type Type_1 may be a video streaming flow type (i.e., Type_1=BW) with the second highest priority, and the pre-defined flow type Type_2 may be a file transfer flow type (i.e., Type_2=BK) with the lowest priority. In this embodiment, the traffic control circuit 108 can provide either of upstream QoS and downstream QoS without using QoS priority queues, and can ensure that the user has good quality of experience (QOE). For example, the drop-based queue-less traffic control may drop packets of each flow classified into the pre-defined flow type Type_2 (e.g., Type_2=BK) according to a drop rate (also called drop probability) Drop_P assigned to the pre-defined flow type Type_2 (e.g., Type_2=BK). The drop rate (drop probability) Drop_P is indicative of the number of packets dropped per a larger number of packets in the flow. For example, when the drop rate (drop probability) is set by 0.01 (1%), it means one packet will be dropped per 100 packets of the flow received by the network device 100. Dropping packets of a flow classified into the pre-defined flow type Type_2 (e.g., Type_2=BK) is equivalent to reducing a flow rate of the pre-defined flow type Type_2 (e.g., Type_2=BK). However, reducing the flow rate may result in a low utilization rate of the network bandwidth. It is preferable to make a utilization rate of the network bandwidth as high as possible. To achieve a high utilization rate of the network bandwidth during the traffic control process, the present invention proposes using the control circuit 110 to dynamically adjust the drop rate Drop_P assigned to the pre-defined flow type Type_2 (e.g., Type_2=BK).

In one exemplary design, the drop rate Drop_P may be inferenced by ML. For example, the control circuit 110 may be implemented by the CPU that acts as an RL agent for setting the drop rate Drop_P, where a current value of R01 (i.e., sum of flow rates of Type_0 and Type_1), a previous value of R01, a current value of R (i.e., sum of flow rates of Type_0, Type_1, and Type_2), and a previous value of R may act as the state of the RL agent, and adjusting the drop rate Drop_P may be the action of the RL agent.

In another exemplary design, the drop rate Drop_P may be set by an adaptive algorithm as follows, where R1 is a flow rate of Type_2, and R is the sum of flow rates of Type_0, Type_1, and Type_2. Start::

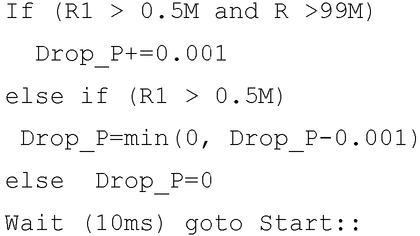

It is assumed that the network device 100 is used to send egress packets to a network with a bandwidth of 100Mbps. When R1 is larger than a predetermined threshold TH1 (e.g., TH1=0. 5Mbps), the control circuit 110 determines that the Type_2 flow does have certain traffic to be served. When R is larger than a predetermined threshold TH2 (e.g., TH2=99Mbps), the control circuit 110 determines that the network congestion is about to happen. Hence, when R1 is larger than TH1 and R is larger than TH2, the control circuit 110 increases the drop rate Drop_P of the Type_2 flow by an increment value INC (e.g., INC=0.001 or other user-defined value), which allows Type_0 flow and Type_1 flow to have chances to increase their flow rates. When R1 is larger than TH1 and R is not larger than TH2, it implies that one or both of Type_0 flow and Type_1 flow may not have much traffic. Hence, the control circuit 110 may decrease the current drop rate Drop_P of the Type_2 flow by a decrement value DEC (e.g., DEC=0.001 or other user-defined value), which allows Type_2 flow to have a higher flow rate for increasing the utilization rate of the 100Mbps bandwidth of the network. It should be noted that, if (Drop_P-DEC) is smaller than a zero value, the control circuit 108 forces the drop rate Drop_P to be the zero value (which is indicative of no packet dropping). When R1 is not larger than the predetermined threshold TH1, the traffic control circuit 108 determines that the Type_2 flow has no impact on flow rates of Type_0 flow and Type_1 flow, and resets the current drop rate Drop_P to the zero value (which is indicative of no packet dropping).

The drop-based queue-less traffic control scheme is capable of providing downstream QoS for a non-congested downlink or upstream QoS for a non-congested uplink. As shown in FIG. 1, the traffic control circuit 108 applies drop-based queue-less traffic control to the Type_2 flow (which is a flow with the lowest priority) only. However, this is for illustrative purposes only, and is not meant to be a limitation of the present invention. Preferably, according to the present invention, the traffic control circuit 108 with drop-based queue-less traffic control capability is capable of providing scheduling effects similar to that of typical QoS queue scheduling algorithms such as SP and WRR.

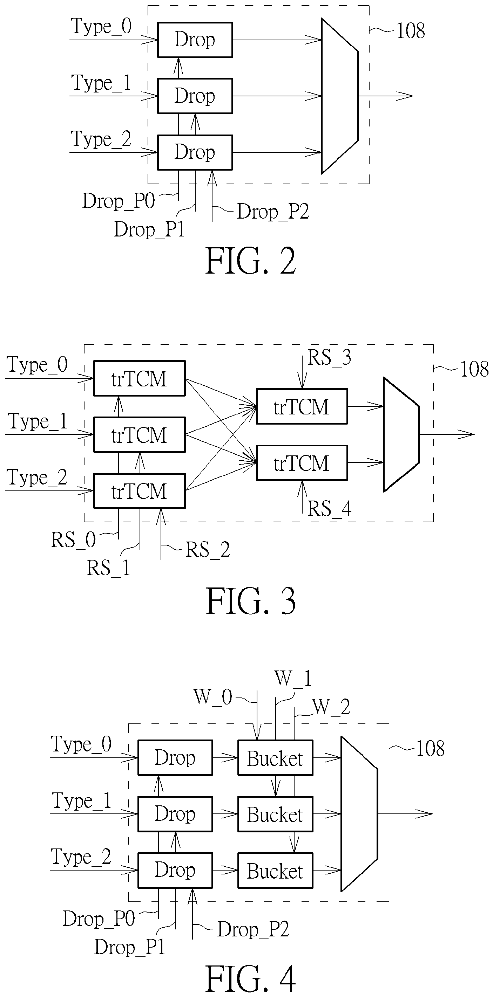

FIG. 2 is a diagram illustrating a drop-based rate control scheme supported by the traffic control circuit 108 that operates in the absence of QoS priority queues according to an embodiment of the present invention. The network device 100 supports pre-defined flow types Type_0, Type_1, and Type_2. For example, the pre-defined flow type Type_0 may be a low latency flow type (i.e., Type_0=LL) with the highest priority, the pre-defined flow type Type_1 may be a video streaming flow type (i.e., Type_1=BW) with the second highest priority, and the pre-defined flow type Type_2 may be a file transfer flow type (i.e., Type_2=BK) with the lowest priority. The control circuit 110 may set drop rates Drop_P0, Drop_P1, Drop_P2 for flow types Type_0, Type_1, and Type_2, respectively. For example, the drop rates Drop_P0, Drop_P1, Drop_P2 may be set by RL or adaptive algorithm. In one exemplary design, the drop rate Drop_P0 may be set by a zero value, and the drop rates Drop_P1 and Drop_P2 may be set by non-zero value. The priority of the flow type Type_0 is higher than that of the flow types Type_1 and Type_2. The SP scheduling effect can be achieved due to no packet dropping applied to packets of flows classified into the highest-priority flow type Type_0. The WRR scheduling effect can be achieved due to packet dropping applied to packets of flows classified into flow types Type_1 and Type_2, where drop rates Drop_P1 and Drop_P2 may be dynamically adjusted according to a rate ratio of flow rates of flow types Type_1 and Type_2.

FIG. 3 is a diagram illustrating a meter-based rate control scheme supported by the traffic control circuit 108 that operates in the absence of QoS priority queues according to an embodiment of the present invention. The network device 100 supports pre-defined flow types Type_0, Type_1, and Type_2. For example, the pre-defined flow type Type_0 may be a low latency flow type (i.e., Type_0=LL) with the highest priority, the pre-defined flow type Type_1 may be a video streaming flow type (i.e., Type_1=BW) with the second highest priority, and the pre-defined flow type Type_2 may be a file transfer flow type (i.e., Type_2=BK) with the lowest priority. The control circuit 110 may set rate settings RS_0, RS_1, RS_2, RS_3, RS_4 for hierarchical two-rate-three-color markets (trTCMs), where each of the rate settings RS_0-RS_4 may include a peak information rate (PIR) and a committed information rate (CIR). Each trTCM meters a packet stream and marks its packets green, yellow, or red. A packet is marked red if it exceeds the PIR. Otherwise, it is marked either yellow or green, depending on whether it exceeds or doesn't exceed the CIR. The rate settings RS_0-RS_4 may be set by RL or adaptive algorithm. According to the rate settings RS_0-RS_4 properly set by the control circuit 110, the hierarchical trTCMs may not drop packets of flows classified into the highest-priority flow type Type_0 to achieve the SP scheduling effect, and may drop packets of flows classified into flow types Type_1 and Type_2 to achieve the WRR scheduling effect, where rate settings RS_0-RS_4 may be dynamically adjusted according to rate ratios of flow rates of flow types Type_0, Type_1 and Type_2.

FIG. 4 is a diagram illustrating a modified deficit round robin (DRR) rate control scheme supported by the traffic control circuit 108 that operates in the absence of QoS priority queues according to an embodiment of the present invention. The network device 100 supports pre-defined flow types Type_0, Type_1, and Type_2. For example, the pre-defined flow type Type_0 may be a low latency flow type (i.e., Type_0=LL) with the highest priority, the pre-defined flow type Type_1 may be a video streaming flow type (i.e., Type_1=BW) with the second highest priority, and the pre-defined flow type Type_2 may be a file transfer flow type (i.e., Type_2=BK) with the lowest priority. The control circuit 110 may set drop rates Drop_P0, Drop_P1, Drop_P2 for flow types Type_0, Type_1, and Type_2, respectively. For example, the drop rates Drop_P0, Drop_P1, Drop_P2 may be set by RL or adaptive algorithm. In addition, the traffic control circuit 108 may add weighted quantum values W_0, W_1, W_2 to token buckets of flow types Type_0, Type_1, and Type_2, respectively. In one exemplary design, the drop rate Drop_P0 may be set by a zero value, a token bucket of the flow type Type_0 may be omitted, and the drop rates Drop_P1 and Drop_P2 may be set by non-zero value. Since the priority of the flow type Type_0 is higher than that of the flow types Type_1 and Type_2, the SP scheduling effect can be achieved due to no packet dropping applied to packets of flows classified into the flow type Type_0. The WRR scheduling effect can be achieved due to packet dropping applied to packets of flows classified into flow types Type_1 and Type_2, where drop rates Drop_P1 and Drop_P2 may be dynamically adjusted according to refill counts of token buckets of flow types Type_1 and Type_2. Further details of the modified DRR rate control scheme supported by the traffic control circuit 108 are described as below with reference to the accompanying drawings.

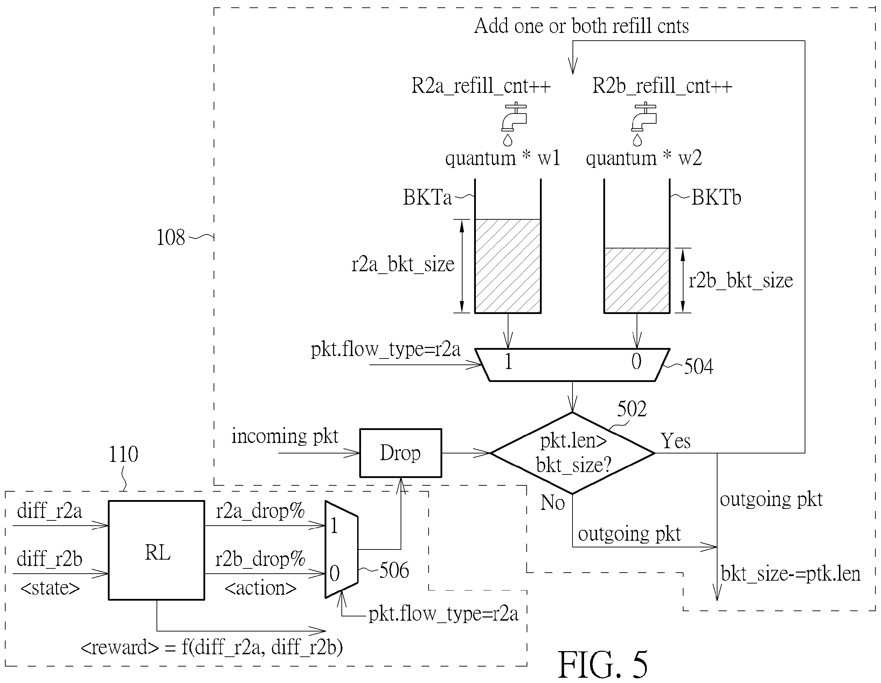

FIG. 5 is a diagram illustrating operations of the modified DRR rate control scheme according to an embodiment of the present invention. Two token buckets BKTa and BKTb are defined for two flows Ra and Rb that are classified into flow types r2a and r2b, respectively. Forwarding an outgoing packet of a specific flow Ra/Rb consumes tokens in a specific token bucket BKTa/BKTb defined for the specific flow Ra/Rb. For example, the flow Ra may be a flow of the aforementioned flow type Type_1 (e.g., Type_1=BW), and the flow Rb may be a flow of the aforementioned flow type Type_2 (e.g., Type_2=BK) . The objective of the modified DRR rate control scheme is to control a flow ratio of a flow rate of the flow Ra and a flow rate of the flow Rb to be w1:w2. Hence, a weighted quantum value that is added to the token bucket BKTa for each refill event may be set by quantum*w1, and a weighted quantum value that is added to the token bucket BKTb for each refill event may be set by quantum*w2. The number of bytes accumulated in the token bucket BKTa is indicated by a bucket size r2a_bkt_size, and the token bucket BKTa is full when the bucket size r2a_bkt_size reaches a threshold bkt_full. Similarly, the number of bytes accumulated in the token bucket BKTb is indicated by a bucket size r2b_bkt_size, and the token bucket BKTb is full when the bucket size r2b_bkt_size reaches the threshold bkt_full. A weighted quantum value quantum*w1 is not allowed to be added to the token bucket BKTa unless r2a_bkt_size + quantum *w1 ≤ bkt_full. After the weighted quantum value quantum*w1 is successfully added to the token bucket BKTa, a refill count R2a_refill_cnt is increased by an increment value (e.g., R2a_refill_cnt=R2a_refill_cnt+1), and the bucket size r2a_bkt_size is increased by the weighted quantum value quantum*w1 (i.e., r2a_bkt_size=r2a_bkt_size+quantum*w1). Similarly, a weighted quantum value quantum*w2 is not allowed to be added to the token bucket BKTb unless r2b_bkt_size + quantum *w2 ≤ bkt_full. After the weighted quantum value quantum*w2 is successfully added to the token bucket BKTb, a refill count R2b_refill_cnt is increased by an increment value (e.g., R2b_refill_cnt=R2b_refill_cnt+1), and the bucket size r2b_bkt_size is increased by the weighted quantum value quantum*w2 (i.e., r2b_bkt_size=r2b_bkt_size+quantum*w2). Generally, the increment value for the refill count R2a_refill_cnt is the same as that for the refill count R2b_refill_cnt, and both are equal to 1. In addition, after an outgoing packet of the flow Ra is successfully forwarded by the network device 100, the bucket size r2a_bkt_size is decreased by a packet length pkt.len of the outgoing packet of the flow Ra (i.e., r2a_bkt_size=r2a_bkt_size-pkt.len). Similarly, after an outgoing packet of the flow Rb is successfully forwarded by the network device 100, the bucket size r2b_bkt_size is decreased by a packet length pkt.len of the forwarded packet of the flow Rb (i.e., r2b_bkt_size=r2b_bkt_size-pkt.len).

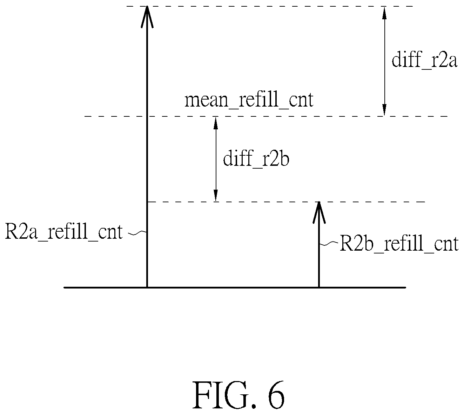

A refill event occurs each time a packet length pkt.len of a packet of the flow Ra is larger than the bucket size r2a_bkt_size of the token bucket BKTa or a packet length pkt.len of a packet of the flow Rb is larger than the bucket size r2b_bkt_size of the token bucket BKTb. Hence, a decision logic 502 compares the packet length pkt.len with a bucket size output from a multiplexer 504, where the multiplexer 504 outputs the bucket size r2a_bkt_size when the flow type of the packet is r2a (i.e., pkt.flow_type=r2a), and outputs the bucket size r2b_bkt_size when the flow type of the packet is r2b (i.e., pkt.flow_type=r2b). Since a ratio of the weighted quantum values quantum*w1 and quantum*w2 is equal to w1:w2, the refill count R2a_refill_cnt is equal to the refill count R2b_refill_cnt if a ratio of the flow rates of flows Ra and Rb is equal to w1:w2. Unfortunately, flow rates of flows Ra and Rb may change with time. If the refill count R2a_refill_cnt is not equal to the refill count R2b_refill_cnt, it implies that the ratio of flow rates of flows Ra and Rb is not equal to w1:w2. Hence, the control circuit 110 can adjust a drop rate r2a_drop% of the flow type r2a and a drop rate r2b_drop% of the flow type r2b such that the difference between the refill counts R2a_refill_cnt and R2b_refill_cnt can be effectively reduced through properly dropping packets of the flows Ra and Rb. For example, the control circuit 110 adjusts the drop rates r2a_drop% and r2b_drop% according to a difference value diff_r2a between the refill count R2a_refill_cnt and an average refill count mean_refill_cnt and a difference value diff_r2b between the refill count R2b_refill_cnt and the average refill count mean_refill_cnt, where the average refill count mean _refill_cnt is equal to (R2a_refill_cnt+ R2b_refill_cnt)/2. The relationship between difference values diff_r2a, diff_r2b, refill counts R2a_refill_cnt, R2b_refill_cnt, and average refill count mean_refill_cnt is illustrated in FIG. 6. In this embodiment, the drop rates r2a_drop% and r2b_drop% may be inferenced by RL, and one of the drop rates r2a_drop% and r2b_drop% is selected and used by the drop-based queue-less traffic control scheme according to the flow type of the incoming packet. Specifically, the multiplexer 506 outputs the drop rate r2a_drop% when the flow type of the incoming packet is r2a (i.e., pkt. flow_type=r2a), and outputs the drop rate r2b_drop% when the flow type of the incoming packet is r2b (i.e., pkt.flow_type=r2b).

For an upstream application, a packet output stream of the traffic control circuit 108 may be provided to the following queueing & scheduling circuit 112 for undergoing typical QoS queue scheduling. Preferably, according to the present invention, the proposed traffic classification and traffic control scheme may co-work with Low-Latency, Low-Loss, Scalable Throughput (L4S) network technology.

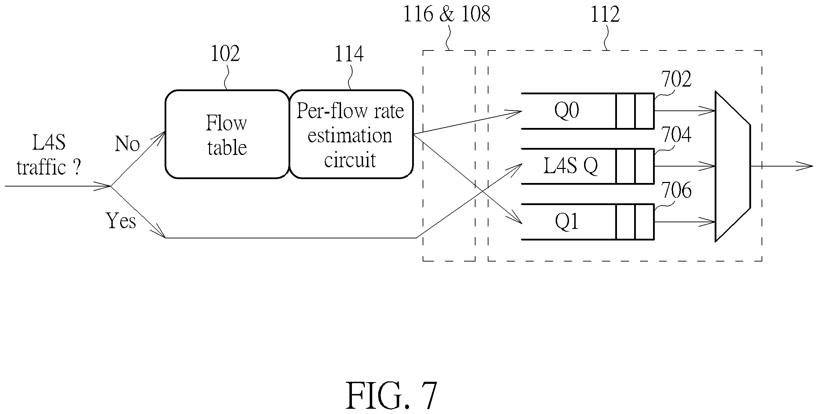

FIG. 7 is a diagram illustrating a first co-working design according to an embodiment of the present invention. The queueing & scheduling circuit 112 may include a plurality of output queues 702, 704, 706, where a priority of the output queue (labeled by "Q0") 702 is higher than a priority of the output queue (labeled by "L4S Q") 704, and a priority of the output queue (labeled by "L4S Q") 704 is higher than a priority of the output queue (labeled by "Q1") 706. When the input traffic is not L4S traffic, packets of the input traffic act as the ingress packets PKT_IN shown in FIG. 1, and are processed by flow table 102, per-flow rate estimation circuit 116, flow dispatcher circuit 116, and traffic control circuit 108. Flows classified into the flow type Type_0 (e.g., Type_0=LL) and output from the traffic control circuit 108 (which is equipped with drop-based queue-less traffic control capability) are pushed into the output queue 702. Flows classified into the flow type Type_1 (e.g., Type_1=BW) and output from the traffic control circuit 108 (which is equipped with drop-based queue-less traffic control capability) are pushed into the output queue 706. Flows classified into the flow type Type_2 (e.g., Type_2=BK) and output from the traffic control circuit 108 (which is equipped with drop-based queue-less traffic control capability) are pushed into the output queue 706. In this embodiment, the output queue 702 is dedicated to storing packets of flows classified into the flow type Type_0, and the output queue 706 is shared between packets of flows classified into flow types Type_1 and Type_2. When the input traffic is L4S traffic, the network device 100 stores L4S flows into the output queue 704. In this embodiment, the output queue 704 is dedicated to storing packets of the L4S traffic.

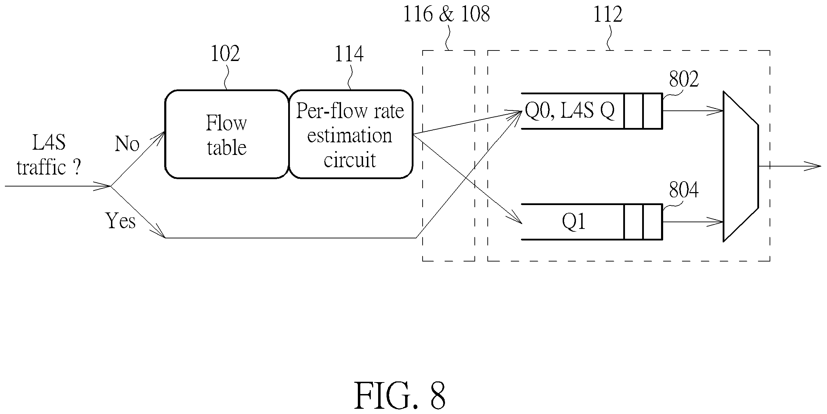

FIG. 8 is a diagram illustrating a second co-working design according to an embodiment of the present invention. The queueing & scheduling circuit 112 may include a plurality of output queues 802 and 804, where a priority of the output queue (labeled by "Q0, L4SQ") 802 is higher than a priority of the output queue (labeled by "Q1") 804. When the input traffic is not L4S traffic, packets of the input traffic act as the ingress packets PKT_IN shown in FIG. 1, and are processed by flow table 102, per-flow rate estimation circuit 116, flow dispatcher circuit 116, and traffic control circuit 108. Flows classified into the flow type Type_0 (e.g., Type_0=LL) and output from the traffic control circuit 108 (which is equipped with drop-based queue-less traffic control capability) are pushed into the output queue 802. Flows classified into the flow type Type_1 (e.g., Type_1=BW) and output from the traffic control circuit 108 (which is equipped with drop-based queue-less traffic control capability) are pushed into the output queue 804. Flows classified into the flow type Type_2 (e.g., Type_2=BK) and output from the traffic control circuit 108 (which is equipped with drop-based queue-less traffic control capability) are pushed into the output queue 804. In this embodiment, the output queue 804 is shared between packets of flows classified into flow types Type_1 and Type_2. When the input traffic is L4S traffic, the network device 100 store L4S flows into the output queue 702. In this embodiment, the output queue 802 is shared between packets of flows classified into the flow type Type_0 and packets of L4S flows.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A network device (100) comprising:
an artificial intelligence, in the following also referred to as AI, aided flow identification circuit (104), arranged to identify specific flows of only a portion of a plurality of pre-defined flow types through machine learning, in the following also referred to as ML, and generate a flow-type override indication for each of the specific flows included in a plurality of flows received by the network device (100); and
a flow classification circuit (106), arranged to classify each of the plurality of flows into one of the plurality of pre-defined flow types;
wherein the AI aided flow identification circuit (104) generates a flow-type override indication for a first flow of the plurality of flows; and in response to the flow-type override indication for the first flow, the flow classification circuit (106) classifies the first flow into a first flow type of the plurality of pre-defined flow types regardless of a flow rate of the first flow; and
wherein the AI aided flow identification circuit (104) does not generate a flow-type override indication for a second flow of the plurality of flows, and the flow classification circuit (106) classifies the second flow into the first flow type or a second flow type of the plurality of pre-defined flow types according to a flow rate of the second flow.

2. The network device (100) of claim 1, wherein the first flow type is a file transfer flow type, and the second flow type is a low latency flow type or a video streaming flow type.

3. The network device (100) of claim 1 or 2, wherein the flow classification circuit (106) is arranged to compare the flow rate of the second flow with a threshold value, and classifies the second flow into the second flow type when the flow rate of the second flow is lower than the threshold value; and/or
wherein the flow classification circuit (106) is arranged to compare the flow rate of the second flow with a/the threshold value, and classifies the second flow into the first flow type when the flow rate of the second flow is higher than the threshold value.

4. The network device (100) of claim 3, further comprising:
a control circuit (110), arranged to dynamically adjust the threshold value.

5. The network device (100) of claim 3 or 4, wherein the flow classification circuit (106) is further arranged to check a user-defined setting, and the user-defined setting indicates dispatching a flow of the first flow type by its flow rate is enabled.

6. The network device (100) of claim 1 or 2, wherein the flow classification circuit (106) is arranged to check a user-defined setting, and the user-defined setting indicates dispatching a flow of the first flow type by its flow rate is enabled, and the flow classification circuit (106) is further arranged to compare the flow rate of the second flow with a first threshold value and a second threshold value, and classifies the second flow into the second flow type when the flow rate of the second flow is neither lower than the first threshold value nor higher than the second threshold value; and/or
wherein the flow classification circuit (106) is arranged to check a user-defined setting, and the user-defined setting indicates dispatching a flow of the first flow type by its flow rate is disabled, and the flow classification circuit (106) is further arranged to compare the flow rate of the second flow with a threshold value, and classifies the second flow into the second flow type when the flow rate of the second flow is not lower than the threshold value.

7. A network device (100) comprising:
a flow classification circuit (106), arranged to classify each of a plurality of flows received by the network device into one of a plurality of pre-defined flow types; and
a traffic control circuit (108), arranged to apply drop-based queue-less traffic control to at least one of the plurality of flows after the at least one of the plurality of flows is classified into at least one of the plurality of pre-defined flow types.

8. The network device (100) of claim 7, wherein the plurality of flows comprise a first flow classified into a first flow type of the plurality of pre-defined flow types, the drop-based queue-less traffic control comprises:
dropping packets of the first flow according to a drop rate assigned to the first flow type; and
the network device (10) further comprises:
a control circuit (110), arranged to dynamically adjust the drop rate assigned to the first flow type.

9. The network device (100) of claim 8, wherein the plurality of flows further comprise a second flow classified into a second flow type of the plurality of pre-defined flow types, and the drop-based queue-less traffic control comprises:
not dropping packets of the second flow type; and/or
dropping packets of the second flow according to a drop rate assigned to the second flow type, wherein the control circuit (110) is further arranged to dynamically adjust the drop rate assigned to the second flow type.

10. The network device (100) of claim 7, wherein the plurality of flows comprise a first flow classified into a first flow type of the plurality of pre-defined flow types, the drop-based queue-less traffic control comprises:
according to rate settings of hierarchical two-rate-three-color markers, in the following also referred to as trTCMs, dropping packets of the first flow through the hierarchical trTCMs; and the network device (100) further comprises:
a control circuit (110), arranged to dynamically adjust the rate settings of the hierarchical trTCMs.

11. The network device (100) of claim 10, wherein the plurality of flows further comprise a second flow classified into a second flow type of the plurality of pre-defined flow types, and the drop-based queue-less traffic control further comprises:
according to the rate settings of the hierarchical trTCMs, not dropping packets of the second flow through the hierarchical trTCMs; and/or
according to the rate settings of the hierarchical trTCMs, dropping packets of the second flow through the hierarchical trTCMs.

12. The network device (100) of claim 7, wherein the plurality of flows comprise a first flow classified into a first flow type of the plurality of pre-defined flow types, and the drop-based queue-less traffic control comprises:
dropping packets of the first flow according to a drop rate assigned to the first flow type; and
the network device (100) further comprises:
a control circuit (110), arranged to dynamically adjust the drop rate assigned to the first flow type, wherein the drop rate of the first flow type is set based at least partly on a token bucket refill count corresponding to the first flow type.

13. The network device (100) of claim 12, wherein the plurality of flows further comprise a second flow classified into a second flow type of the plurality of pre-defined flow types, and the drop-based queue-less traffic control further comprises:
not dropping packets of the second flow type; and/or
dropping packets of the second flow according to a drop rate assigned to the second flow type, wherein the control circuit (110) is further arranged to dynamically adjust the drop rate assigned to the second flow type, where the drop rate of the second flow type is set based at least partly on a token bucket refill count corresponding to the second flow type.

14. The network device (100) of any one of claims 7 to 13, wherein the traffic control circuit (108) is further arranged to output the first flow into a first output queue and output the second flow into a second output queue; and the network device (100) is further arranged to receive Low-Latency, Low-Loss, Scalable Throughput, in the following also referred to as L4S, flows, and store the L4S flows into a third output queue, where a priority of the third output queue is lower than a priority of the second output queue and higher than a priority of the first output queue.

15. The network device (100) of any one of claims 7 to 13, wherein the traffic control circuit (108) is further arranged to output the first flow into a first output queue and output the second flow into a second output queue; and the network device (100) is further arranged to receive L4S flows, and store the L4S flows into the second output queue, where a priority of the second output queue is higher than a priority of the first output queue.
